# EUROPÄISCHE PATENTSCHRIFT

(11) **EP 2 694 341 B1**
(45) Veröffentlichungstag und Bekanntmachung des Hinweises auf die Patenterteilung: **06.05.2015**
(21) Anmeldenummer: 12707485.4
(22) Anmeldetag: 01.03.2012
(51) Int. Cl.: B60T 8/88, B60T 7/04

(54) **TECHNIK ZUM REDUNDANTEN ERFASSEN EINER BETÄTIGUNG EINER KRAFTFAHRZEUG-BREMSANLAGE**
TECHNIQUE FOR THE REDUNDANT DETECTION OF AN ACTUATION OF A MOTOR-VEHICLE BRAKE SYSTEM
TECHNIQUE DE DÉTECTION REDONDANTE DE L'ACTIONNEMENT D'UN SYSTÈME DE FREINAGE D'UN VÉHICULE AUTOMOBILE

(30) Priorität: 05.04.2011 DE 102011016125
(43) Veröffentlichungstag der Anmeldung: 12.02.2014
(73) Patentinhaber: Lucas Automotive GmbH, 56070 Koblenz (DE)
(72) Erfinder: GRIESER-SCHMITZ, Stefan, 56070 Koblenz (DE); KELLER, Michael, 55595 Traisen (DE); VINCENT, Kenneth, Alcester Warwickshire B49 6QE (GB)
(74) Vertreter: Röthinger, Rainer
(86) Internationale Anmeldenummer: PCT/EP2012/000897
(87) Internationale Veröffentlichungsnummer: WO 2012/136293

(56) Entgegenhaltungen:
- EP-A2- 0 937 614
- WO-A1-00/24618
- WO-A2-2005/032896
- DE-A1- 19 510 525
- DE-A1- 19 805 089
- DE-A1-102007 035 326

## Beschreibung

### Technisches Gebiet

Die vorliegende Offenbarung betrifft allgemein das Gebiet der Kraftfahrzeug-Bremsanlagen. Genauer gesagt geht es um die Verbesserung von Sicherheitsaspekten im Zusammenhang mit dem Erfassen einer Betätigung einer solchen Bremsanlage.

### Hintergrund

Moderne Kraftfahrzeug-Bremsanlagen sind mit einer Vielzahl von Sensoren ausgerüstet. Aus der oder aus der DE 198 05 089 A1 ist beispielsweise eine Bremsanlage bekannt, die eine mit mehreren Sensoren bestückte Betätigungseinrichtung umfasst. Die hierbei vorgesehenen Sensoren erfassen im Rahmen eines Bremsvorgangs unterschiedliche physikalische Parameter. So dient ein Drucksensor dem Erfassen eines Hydraulikdrucks im Hauptzylinder, ein Kraftsensor misst eine Betätigungskraft am Bremspedal und ein Pedalwegsensor ermittelt den vom Bremspedal zurückgelegten Weg. Auch andere Sensoren wie Bremslichtgeber oder Pedalwinkelsensoren finden herkömmlicherweise in Bremsanlagen Verwendung.

Für eine Reihe von Fahrsicherheitsmechanismen und Fahrkomfortsysteme, aber auch für andere Zwecke wie die Steuerung des regenerativen Bremsbetriebs bei Hybridfahrzeugen, ist das Erkennen eines Bremsvorgangs von zentraler Bedeutung. Zu diesem Zweck, also zum Erfassen einer Betätigung der Bremsanlage, können unterschiedliche der genannten Sensoren zum Einsatz gelangen. Beispielsweise kann mittels des Pedalwegsensors eine Bewegung des Bremspedals erfasst und so auf eine Betätigung der Bremsanlage geschlossen werden. Die erkannte Betätigung wird dann in Gestalt eines Betätigungssignals, das von einer dem Pedalwegsensor nachgeschalteten Auswertungseinheit erzeugt wird, nachfolgenden Systemen und Mechanismen signalisiert.

Aufgrund der Bedeutung des Betätigungssignals sind Probleme zu erwarten, wenn der Pedalwegsensor ausfällt. Gleiches gilt bei einem Ausfall der dem Pedalwegsensor nachgeschalteten Auswertungseinheit.

### Kurzer Abriss

Es besteht daher ein Bedarf an einer zuverlässigen Erfassung der Betätigung einer Kraftfahrzeug-Bremsanlage.

Gemäß einem Aspekt wird eine Vorrichtung zum redundanten Erfassen einer Betätigung einer Kraftfahrzeugbremsanlage vorgeschlagen. Die Vorrichtung umfasst wenigstens einen ersten Sensor zum Erzeugen eines ersten Sensorsignals, wobei das erste Sensorsignal auf eine Bewegung einer mechanischen Eingangskomponente der Bremsanlage hinweist, wenigstens einen zweiten Sensor zum Erfassen eines zweiten Sensorsignals, wobei das zweite Sensorsignal auf einen Hydraulikdruck in der Bremsanlage hinweist, sowie eine mit dem wenigstens einen ersten Sensor und dem wenigstens einen zweiten Sensor gekoppelte Verarbeitungseinrichtung, die dazu ausgebildet ist, wahlweise ein auf Grundlage des ersten Sensorsignals oder ein auf Grundlage des zweiten Sensorsignals erzeugtes Betätigungssignal auszugeben, wobei das Betätigungssignal auf eine Betätigung der Bremsanlage hinweist.

Das Betätigungssignal kann nachfolgenden Fahrsicherheitsmechanismen, Fahrkomfortsystemen oder anderen Einrichtungen signalisiert werden. Es kann sich bei dem Betätigungssignal um ein analoges oder digitales (z. B. binäres) Signal handeln. Ferner kann das Betätigungssignal fortlaufend (also auch bei einer ausbleibenden Betätigung der Bremsanlage) oder lediglich zeitweise (im betätigten Zustand der Bremsanlage) erzeugt oder ausgegeben werden.

Die Verarbeitungseinrichtung ist dazu ausgebildet eine Auswahl im Hinblick auf das auszugebende Betätigungssignal in Abhängigkeit einer Funktionsfähigkeit einzelner Komponenten der Verarbeitungseinrichtung selbst zu treffen. Die Verarbeitungseinrichtung weist daher einen internen Mechanismus zur Überprüfung ihrer Funktionsfähigkeit auf.

Gemäß der Erfindung ist die Verarbeitungseinrichtung dazu ausgebildet, bei regulärer Funktionsfähigkeit der Vorrichtung das auf Grundlage des ersten Sensorsignals erzeugte Betätigungssignal auszugeben. Zusätzlich oder alternativ hierzu ist die Verarbeitungseinrichtung dazu ausgebildet, bei irregulärer Funktionsfähigkeit der Vorrichtung das auf Grundlage des zweiten Sensorsignals erzeugte Betätigungssignal auszugeben.

Die Überprüfung der Funktionsfähigkeit kann eine Plausibilisierung umfassen. Gemäß einer Realisierung ist die Verarbeitungseinrichtung dazu ausgebildet, das zweite Sensorsignal (oder ein daraus abgeleitetes Signal) zur Plausibilisierung des ersten Sensorsignals heranzuziehen. Bei negativer Plausibilisierung des ersten Sensorsignals kann auf eine irreguläre Funktionsfähigkeit der Vorrichtung geschlossen werden. Andererseits kann bei einer positiven Plausibilisierung von einer regulären Funktionsfähigkeit ausgegangen werden. Ebenso kann das erste Sensorsignal oder ein daraus abgeleitetes Signal zur Plausibilisierung des zweiten Sensorsignals im Zusammenhang mit einer Bremsbetätigung verwendet werden.

Die Verarbeitungseinrichtung kann eine oder mehrere interne Komponenten aufweisen. So kann eine mit wenigstens dem ersten Sensor (und optional auch dem zweiten Sensor) gekoppelte erste Auswertungseinheit vorgesehen sein, die zum Auswerten des ersten Sensorsignals (und optional des zweiten Sensorsignals) ausgebildet ist. Die erste Auswertungseinheit kann ferner zum Erzeugen des Betätigungssignals auf der Grundlage des (ausgewerteten) ersten und/oder zweiten Sensorsignals ausgebildet sein. Zusätzlich oder alternativ hierzu kann eine mit wenigstens dem zweiten Sensor (und optional auch dem ersten Sensor) gekoppelte zweite Auswertungseinheit vorgesehen werden. Die zweite Auswertungseinheit kann von der ersten Auswertungseinheit verschieden und parallel zu dieser in Signallaufrichtung angeordnet sein. Die zweite Auswertungseinheit ist zum Auswerten des zweiten (und optional des ersten) Sensorsignals und zum Erzeugen des Betätigungssignals auf Grundlage des zweiten (und/oder des ersten) Sensorsignals ausgebildet.

Die Verarbeitungseinrichtung kann ferner eine mit der ersten Auswertungseinheit und/oder der zweiten Auswertungseinheit gekoppelte Überprüfungseinheit umfassen. In einer Implementierung ist die Überprüfungseinheit zur Überprüfung der Funktionsfähigkeit der ersten und/oder zweiten Auswertungseinheit ausgebildet. Bei irregulärer Funktionsfähigkeit der ersten Auswertungseinheit kann das auf Grundlage des zweiten Sensorsignals erzeugte Betätigungssignal, und umgekehrt, ausgegeben werden.

Im Fall von zwei parallel zueinander angeordneten Auswertungseinheiten kann die Verarbeitungseinrichtung ferner einen mit Ausgangsseiten der beiden Auswertungseinheiten gekoppelten Multiplexer umfassen. Der Multiplexer kann von der Überprüfungseinheit in Abhängigkeit der Funktionsfähigkeit der ersten (und/oder der zweiten) Auswertungseinheit ansteuerbar sein, um wahlweise das auf Grundlage des ersten oder das auf Grundlage des zweiten Sensorsignals erzeugte Betätigungssignal auszugeben.

Die zweite Auswertungseinheit kann einen Komparator umfassen. Der Komparator ist vorzugsweise dazu ausgebildet, das zweite Sensorsignal mit einem Referenzsignal zu vergleichen und in Abhängigkeit des Vergleichs das Betätigungssignal zu erzeugen. Sofern der ersten Auswertungseinheit ebenfalls das zweite Sensorsignal zugeführt wird, kann die erste Auswertungseinheit ebenfalls einen derartigen Komparator beinhalten. Ein auf einem Referenzsignal basierender Komparator kann auch zur Erzeugung des Betätigungssignals auf der Grundlage des ersten Sensorsignals durch die erste oder zweite Auswertungseinheit verwendet werden.

Die Sensoren können zum Erfassen unterschiedlichster physikalischer Parameter ausgebildet sein. Gemäß einer beispielhaften Realisierung ist der erste Sensor zur Erfassung eines Bremswunsches eines Fahrers, also beispielsweise einer Bremspedalbetätigung ausgebildet. Die Bremspedalbetätigung kann von einem Pedalwegsensor, einem Pedalwinkelsensor, einem Pedalkraftsensor oder einem Bremslichtgeber erkannt werden. Es können auch in redundanter Weise zwei oder mehr dieser Sensoren vorgesehen werden.

Bei dem zweiten Sensor kann es sich um einen Hydraulikdrucksensor handeln. Der Hydraulikdrucksensor kann beispielsweise im Bereich des Hauptzylinders zum Erfassen des dort herrschenden Hydraulikdrucks angeordnet sein. In einer beispielhaften Implementierung ist der Hydraulikdrucksensor einem Radschlupfregelsystem zugeordnet.

Gemäß einem weiteren Aspekt wird ein Verfahren zum redundanten Erfassen einer Betätigung einer Kraftfahrzeug-Bremsanlage vorgeschlagen. Das Verfahren umfasst die Schritte des Bereitstellens wenigstens eines ersten Sensors zum Erzeugen eines ersten Sensorsignals, das auf eine Bewegung einer mechanischen Eingangskomponente der Bremsanlage hinweist, des Bereitstellens wenigstens eines zweiten Sensors zum Erzeugen eines zweiten Sensorsignals, das auf einen Hydraulikdruck in der Bremsanlage hinweist, sowie des wahlweisen Ausgebens eines auf Grundlage des ersten Sensorsignals oder eines auf Grundlage des zweiten Sensorsignals erzeugten Betätigungssignals, das auf eine Betätigung der Bremsanlage hinweist.

Bei einer regulären Funktionsfähigkeit eines die Bremsanlage umfassenden Bremssystems wird das auf Grundlage des ersten Sensorsignals erzeugte Betätigungssignal ausgegeben.

Andererseits kann bei einer irregulären Funktionsfähigkeit des Bremssystems das auf Grundlage des zweiten Sensorsignals erzeugte Betätigungssignal ausgegeben werden. Das Bremssystem kann neben der Bremsanlage (die beispielsweise Radbremsen, ein Radschlupfregelsystem, usw. beinhaltet) auch die hier vorgestellte Vorrichtung zum redundanten Erfassen einer Betätigung der Bremsanlage umfassen.

Das zweite Sensorsignal oder ein daraus abgeleitetes Signal kann zur Plausibilisierung des ersten Sensorsignals herangezogen werden. Umgekehrt kann das zweite Sensorsignal auf der Grundlage des ersten Sensorsignals oder eines daraus abgeleiteten Signals plausibilisiert werden. Bei einer negativen Plausibilisierung des ersten Sensorsignals kann auf eine irreguläre Funktionsfähigkeit der Vorrichtung (jedenfalls im Hinblick auf den für das erste Sensorsignal vorgesehenen Signalpfad) geschlossen werden, und umgekehrt.

Eine mit wenigstens dem ersten Sensor gekoppelte erste Auswertungseinheit kann das erste Sensorsignal auswerten und auf Grundlage des ersten Sensorsignals das Betätigungssignal erzeugen. Alternativ oder zusätzlich hierzu kann eine mit wenigstens dem zweiten Sensor gekoppelte zweite Auswertungseinheit das zweite Sensorsignal auswerten und auf Grundlage des zweiten Sensorsignals das Betätigungssignal erzeugen. Bei irregulärer Funktionsfähigkeit der ersten Auswertungseinheit kann das auf Grundlage des zweiten Sensorsignals erzeugte Betätigungssignal ausgegeben werden, und umgekehrt.

Ebenfalls bereitgestellt wird ein Computerprogrammprodukt mit Programmcodemitteln zum Durchführen der Schritte des hier vorgestellten Verfahrens, wenn das Computerprogrammprodukt auf einer Computereinrichtung ausgeführt wird. Bei der Computereinrichtung kann es sich um ein Steuergerät (Electronic Control Unit oder ECU) handeln. Das Computerprogrammprodukt kann auf einem computerlesbaren Aufzeichnungsträger abgespeichert sein.

### Kurze Beschreibung der Zeichnungen

Weitere Aspekte, Vorteile und Merkmale der hier vorgestellten Technik zum redundanten Erfassen einer Betätigung einer Kraftfahrzeug-Bremsanlage ergeben sich aus der nachfolgenden Beschreibung eines Ausführungsbeispiels sowie aus den Figuren. Es zeigen:
- Fig. 1: ein Ausführungsbeispiel einer Vorrichtung zum redundanten Erfassen einer Betätigung einer Kraftfahrzeug-Bremsanlage; und
- Fig. 2: ein Ausführungsbeispiel eines Betriebsverfahrens der Vorrichtung gemäß Fig. 1.

### Detaillierte Beschreibung

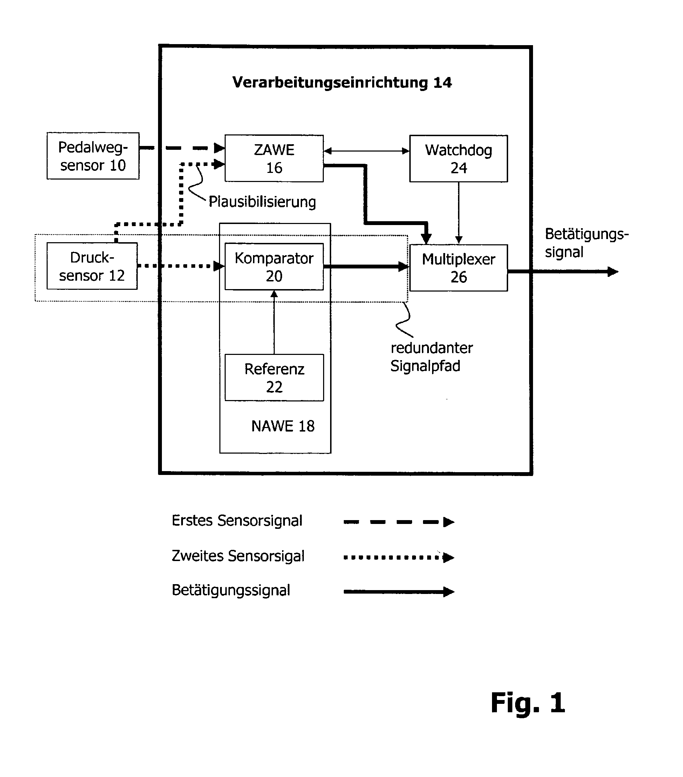

Fig. 1 zeigt ein Ausführungsbeispiel einer Vorrichtung zum redundanten Erfassen einer Betätigung einer Kraftfahrzeug-Bremsanlage. Die Vorrichtung gestattet das Erfassen einer Bremsbetätigung selbst bei einem Sensordefekt oder einer Fehlfunktion in der dem Sensor nachfolgenden Auswertekette.

Wie in Fig. 1 dargestellt, umfasst die Vorrichtung als zentrale Komponenten wenigstens zwei Sensoren 10, 12 zum redundanten Erfassen einer Betätigung der Bremsanlage sowie eine mit den Sensoren 10, 12 gekoppelte Verarbeitungseinrichtung 14. Die Verarbeitungseinrichtung 14 empfängt eingangsseitig zwei oder mehr Sensorsignale und liefert ausgangsseitig ein Betätigungssignal, das auf eine Betätigung der Bremsanlage hinweist. Das Betätigungssignal wird der Verarbeitungseinrichtung 14 nachgeschalteten Mechanismen und Systemen zugeführt. Beispielhaft genannt werden kann hier die Fahrerbremswunscherkennung etwa bei einer elektrisch gesteuerten Bremsanlage ("brake-by-wire) bzw. einer Bremsanlage, die für ein Hybrid-Kraftfahrzeug mit regenerativer Bremsfunktion vorgesehen ist.

Bei dem ersten Sensor 10 handelt es sich allgemein um einen Sensor, der eine Bewegung einer mechanischen Eingangskomponente der Bremsanlage erfasst. Bei der Eingangskomponente kann es sich beispielsweise um ein Bremspedal, einen Bremskraftverstärker oder einen Hauptzylinder handeln. Im Ausführungsbeispiel gemäß Fig. 1 ist der erste Sensor als Pedalwegsensor 10 ausgebildet. Es versteht sich, dass anstelle des Pedalwegsensors 10 oder zusätzlich zum Pedalwegsensor 10 weitere Sensoren, die dazu geeignet sind, eine Bewegung einer mechanischen Eingangskomponente der Bremsanlage zu erfassen, vorgesehen sein können.

Zusätzlich zum Pedalwegsensor 10 ist ein zweiter Sensor vorgesehen, der im Ausführungsbeispiel gemäß Fig. 1 als Drucksensor 12 ausgebildet ist. Der Drucksensor 12 erfasst einen Hydraulikdruck in der Bremsanlage im Zusammenhang mit dem Erfassen einer Betätigung derselben. Der Drucksensor 12 kann beispielsweise im Bereich eines Hauptzylinders der Bremsanlage angeordnet sein, um den Hauptzylinderdruck zu erfassen. Der Drucksensor 12 könnte jedoch auch an einer anderen Stelle (wie an den Radbremsen oder im Hydraulikaggregat eines Radschlupfregelsystems) angeordnet sein. Es versteht sich, dass anstelle eines einzigen Drucksensors 12 mehrere solcher Drucksensoren vorgesehen und mit der Verarbeitungseinrichtung 14 gekoppelt sein können.

Gemäß einer Realisierung ist der Drucksensor 12 ausschließlich zum (redundanten) Erfassen einer Betätigung der Bremsanlage vorgesehen. Aus Kostengründen ist es jedoch vorteilhaft, wenn ein in der Bremsanlage ohnehin verbauter Drucksensor 12 (z.B. der Drucksensor eines Radschlupfregelsystems) zusätzlich zum Erfassen einer Betätigung der Bremsanlage verwendet wird.

Wie in Fig. 1 dargestellt, umfasst die Verarbeitungseinrichtung 14 eine Vielzahl von internen Komponenten. Bei den Komponenten kann es sich um logisch oder physikalisch separate Komponenten (z.B. separate elektrische oder elektronische Schaltungen) handeln.

Kernstück der Verarbeitungseinrichtung 14 ist eine zentrale Auswertungseinheit 16, die von einem Hauptrechner (in z.B. einer ECU) realisiert werden kann. Wie in Fig. 1 veranschaulicht, wird der zentralen Auswertungseinheit 16 sowohl ein Ausgangssignal des Pedalwegsensors 10 als auch ein Ausgangssignal des Drucksensors 12 zugeführt. Bei dem Ausgangssignal des Pedalwegsensors 10 handelt es sich um ein analoges elektrisches Signal, das auf einen Betätigungsweg des Bremspedals hinweist. In ähnlicher Weise handelt es sich bei dem Ausgangssignal des Drucksensors 12 um ein analoges elektrisches Signal, welches auf einen in der Bremsanlage vorherrschenden Hydraulikdruck hinweist.

Die zentrale Auswertungseinheit 16 ist dazu ausgebildet, das Ausgangssignal des Pedalwegsensors 10 mit einem Referenzwert zu vergleichen und auf der Grundlage dieses Vergleichs einen Signalpegel für ein von der zentralen Auswertungseinheit 16 ausgangsseitig bereitgestelltes Betätigungssignal einzustellen. Ein Überschreiten oder Unterschreiten des Referenzwerts macht sich daher in einer Pegeländerung des (binären) Betätigungssignals bemerkbar. Eine Betätigung der Bremsanlage wird von der zentralen Auswertungseinheit 16 immer dann erkannt, wenn das Ausgangssignal des Pedalwegsensors 10 darauf hinweist, dass ein über dem Referenzwert liegender Pedalweg zurückgelegt wurde. Die zentrale Auswertungseinheit 16 ist ferner dazu ausgebildet, das Ausgangssignal des Pedalwegsensors 10 auf der Grundlage des Ausgangssignals des Drucksensors 12 zu plausibilisieren.

Parallel zur zentralen Auswertungseinheit 16 ist in der Verarbeitungseinrichtung 14 eine nebengeordnete Auswertungseinheit 18 (z.B. als separate elektrische oder elektronische Schaltung) vorgesehen. Die nebengeordnete Auswertungseinheit 18 empfängt im Ausführungsbeispiel gemäß Fig. 1 lediglich das Ausgangssignal des Drucksensors 12. Das Ausgangssignal des Drucksensors 12 wird daher parallel der zentralen Auswertungseinheit 16 und der nebengeordneten Auswertungseinheit 18 zugeführt.

Die nebengeordnete Auswertungseinheit 18 umfasst einen Komparator 20 sowie einen Referenzwertgeber 22. Der Komparator 20 ist dazu ausgebildet, das Ausgangssignal des Drucksensors 12 mit einem vom Referenzwertgeber 22 bereitgestellten und optional einstellbaren Referenzwert zu vergleichen. Ein Überschreiten oder Unterschreiten des Referenzwerts bewirkt eine Pegeländerung eines Ausgangssignals des Komparators 20. Die nebengeordnete Auswertungseinheit 18 erzeugt auf diese Weise ein binäres Betätigungssignal (in Gestalt des Ausgangssignals des Komparators 20), das auf eine Betätigung der Bremsanlage hinweist. Eine Betätigung wird daher immer dann erkannt, wenn der vom Drucksensor 12 erfasste Hydraulikdruck den Referenzwert überschreitet.

Eine in Fig. 1 als "Watchdog" bezeichnete Überprüfungseinheit 24 ist dazu vorgesehen, die Funktionsfähigkeit der zentralen Auswertungseinheit 16 zu überprüfen. In Abhängigkeit des Ergebnisses dieser Überprüfung steuert die Überprüfungseinheit 24 einen Multiplexer 26 an.

Wie in Fig. 1 gezeigt, empfängt der Multiplexer 26 eingangsseitig sowohl das von der zentralen Auswertungseinheit 16 erzeugte Betätigungssignal als auch das von der nebengeordneten Auswertungseinheit 18 erzeugte Betätigungssignal. Bei regulärer Funktionsfähigkeit der zentralen Auswertungseinheit 16 steuert die Überprüfungseinheit 24 den Multiplexer 26 dahingehend an, dass die Verarbeitungseinrichtung 14 das von der zentralen Auswertungseinheit 16 erzeugte Betätigungssignal ausgibt. Bei irregulärer Funktionsfähigkeit erfolgt mittels der Überprüfungseinheit 24 ein Umschalten des Multiplexers 26 derart, dass die Verarbeitungseinheit 14 das von der nebengeordneten Auswertungseinheit 18 erzeugte Betätigungssignal ausgibt.

Die Erzeugung des Betätigungssignals basiert daher primär auf dem Ausgangssignal der zentralen Auswertungseinheit 16 (sowie dem Ausgangssignal des Pedalwegsensor 10). Von der durch den Drucksensor und die nebengeordnete Auswertungseinheit 18 bereitgestellten Redundanz im Hinblick auf das Betätigungssignal wird hingegen im Fehlerfall Gebrauch gemacht.

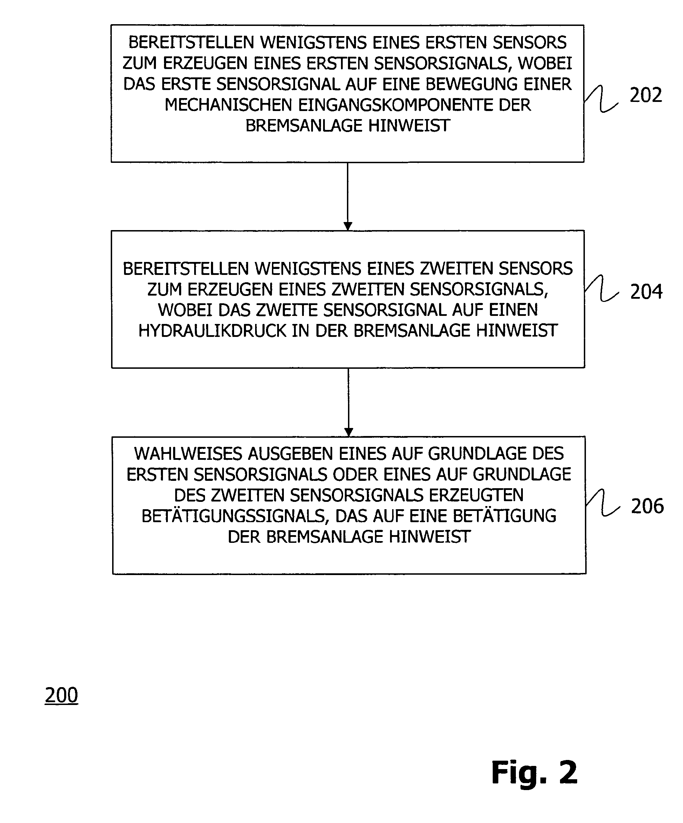

Im Folgenden wird die Funktionsweise der in Fig. 1 dargestellten Vorrichtung zum redundanten Erfassen einer Bremsbetätigung unter Bezugnahme auf das Ablaufdiagramm 200 gemäß Fig. 2 näher erläutert. Das Ablaufdiagramm 200 veranschaulicht ein Ausführungsbeispiel eines Verfahrens zum redundanten Erfassen einer Bremsbetätigung auf der Grundlage der in Fig. 1 dargestellten Vorrichtung.

In zwei parallel zueinander durchgeführten Verfahrensschritten 202 und 204 stellen der Pedalwegsensor 10 und der Drucksensor 12 ihre Ausgangssignale der Verarbeitungseinrichtung 14 bereit. Wie bereits oben erläutert, weist das Ausgangssignal des Pedalwegsensors 10 auf eine Bremspedalbewegung hin. Das Ausgangssignal des Drucksensors 12 signalisiert hingegen einen Druckanstieg im Hydraulikkreis der Bremsanlage. Beide Ereignisse, d.h. eine Betätigung des Bremspedals einerseits und ein Druckanstieg im Hydraulikkreis andererseits, lassen auf eine Betätigung der Bremsanlage schließen.

In einem weiteren Verfahrensschritt 206 gibt die Verarbeitungseinrichtung 14 ein Betätigungssignal aus. Genauer gesagt wird wahlweise ein auf Grundlage des Ausgangssignals des Pedalwegsensors 10 oder ein auf Grundlage des Ausgangsignals des Drucksensors 12 erzeugtes Betätigungssignal von der Verarbeitungseinrichtung 14 ausgegeben. Verschiedene exemplarische Auswahlmechanismen, die in der Verarbeitungseinrichtung 14 in diesem Zusammenhang implementiert werden können, werden im Folgenden näher erläutert.

Im normalen Betrieb, also bei regulärer Funktionsfähigkeit der in Fig. 1 dargestellten Vorrichtung, wird das auf der Grundlage eines Ausgangssignals des Pedalwegsensors 10 erzeugte Betätigungssignal von der Verarbeitungseinrichtung 14 ausgegeben. Zu diesem Zweck wertet die zentrale Auswertungseinheit 16 das Ausgangssignal des Pedalwegsensors 10, wie oben erläutert, durch Vergleich mit einem Referenzwert aus, wobei sich ein Überschreiten oder Unterschreiten des Referenzwerts durch eine Pegeländerung in dem von der zentralen Auswertungseinheit 16 erzeugten Betätigungssignal bemerkbar macht.

Zur Plausibilisierung des Ausgangssignals des Pedalwegsensors 10 liest die zentrale Auswertungseinheit 16 zusätzlich das Ausgangssignal des Drucksensors 12 ein und wertet dieses Ausgangssignal (wie oben unter Bezugnahme auf die nebengeordnete Auswertungseinheit 18 beschrieben) ebenfalls aus. Sofern beide Ausgangssignale übereinstimmend eine Betätigung der Bremsanlage anzeigen, wird von der zentralen Auswertungseinheit 16 ein entsprechendes Betätigungssignal erzeugt.

Wird hingegen von der zentralen Auswertungseinheit 16 ein Hydraulikdruckanstieg im Hauptzylinder ohne eine entsprechende Signaländerung des Ausgangssignals des Pedalwegsensors 10 erkannt, kann von der zentralen Auswertungseinheit 16 auf eine mangelnde Funktionsfähigkeit des Pedalwegsensors 10 geschlossen werden. In diesem Fall erzeugt die zentrale Auswertungseinheit 16 das auf die Betätigung der Bremsanlage hinweisende Betätigungssignal auf der Grundlage des Ausgangssignals des Drucksensors 12.

Die Funktionsfähigkeit der zentralen Auswertungseinheit 16 wird durch die Überprüfungseinheit 24 überwacht. Solange die Überprüfungseinheit 24 eine reguläre Funktionsfähigkeit der zentralen Auswertungseinheit 16 erkennt, steuert die Überprüfungseinheit 24 den Multiplexer 26 derart an, dass das von der zentralen Auswertungseinheit 16 erzeugte Betätigungssignal von der Verarbeitungseinrichtung 14 als Ausgangssignal bereitgestellt wird. Erkennt die Überprüfungseinheit 24 hingegen eine irreguläre Funktion (z.B. einen Ausfall) der zentralen Auswertungseinheit 16, wird der Multiplexer 26 derart angesteuert, dass das von der nebengeordneten Auswertungseinheit 18 erzeugte Betätigungssignal von der Verarbeitungseinrichtung 14 ausgegeben wird. In diesem Fall kommt also der in Fig. 1 veranschaulichte redundante Signalpfad, welcher den Drucksensor 12 sowie die nebengeordnete Auswertungseinheit 18 umfasst, zum Tragen.

Hier erweist es sich also als Vorteil, dass das Ausgangssignal des Drucksensors 12 durch die von der zentralen Auswertungseinheit 16 (Rechner bzw. ECU) verschiedene Auswertungseinheit 18 (z.B. eine separate Schaltung) ausgewertet wird. Das Ausgangssignal des Drucksensors 12 kann daher nicht nur zur Plausibilisierung des Ausgangssignals des Pedalwegsensors 10, sondern auch als Rückfalllösung bei mangelnder Funktionsfähigkeit der zentralen Auswertungseinheit 16 verwendet werden.

Da die Bremsdruckinformation bei modernen Bremsanlagen mit Radschlupfregelfunktionalität ohnehin zur Verfügung steht, lässt sich die hier beschriebene Technik zum redundanten Erfassen der Bremsbetätigung ohne zusätzliche Sensorik realisieren. Der hier vorgestellte Ansatz kann sowohl zu Plausibilisierungszwecken als auch als Rückfalllösung (mit automatischer Umschaltung im Fehlerfall) verwendet werden. Hierbei kann die nebengeordnete Auswertungseinheit 18 vorteilhafterweise als separate Auswerteschaltung realisiert werden, die von einem Hauptrechner (zentrale Auswertungseinheit 16) unabhängig betrieben wird.

## Patentansprüche

1. Vorrichtung zum redundanten Erfassen einer Betätigung einer Kraftfahrzeug-Bremsanlage, umfassend:
wenigstens einen ersten Sensor (10) zum Erzeugen eines ersten Sensorsignals, wobei das erste Sensorsignal auf eine Bewegung einer mechanischen Eingangskomponente der Bremsanlage hinweist;
wenigstens einen zweiten Sensor (12) zum Erzeugen eines zweiten Sensorsignals, wobei das zweite Sensorsignal auf einen Hydraulikdruck in der Bremsanlage hinweist;
eine mit dem wenigstens einen ersten Sensor (10) und dem wenigstens einen zweiten Sensor (12) gekoppelte Verarbeitungseinrichtung (14), die dazu ausgebildet ist:
wahlweise ein auf Grundlage des ersten Sensorsignals oder ein auf Grundlage des zweiten Sensorsignals erzeugtes Betätigungssignal auszugeben, wobei das Betätigungssignal auf eine Betätigung der Bremsanlage hinweist;
**dadurch gekennzeichnet, dass** die Verarbeitungseinrichtung dazu ausgebildet ist
bei regulärer Funktionsfähigkeit der Vorrichtung das auf Grundlage des ersten Sensorsignals erzeugte Betätigungssignal auszugeben und/oder bei irregulärer Funktionsfähigkeit der Vorrichtung das auf Grundlage des zweiten Sensorsignals erzeugte Betätigungssignal auszugeben.

2. Vorrichtung nach Anspruch 1, wobei die Verarbeitungseinrichtung (14) dazu ausgebildet ist, das zweite Sensorsignal oder ein daraus abgeleitetes Signal zur Plausibilisierung des ersten Sensorsignals heranzuziehen, und wobei vorzugsweise die Verarbeitungseinrichtung (14) dazu ausgebildet ist, bei negativer Plausibilisierung des ersten Sensorsignals auf eine irreguläre Funktionsfähigkeit der Vorrichtung zu schließen.

3. Vorrichtung nach einem der vorhergehenden Ansprüche, wobei die Verarbeitungseinrichtung (14) Folgendes umfasst:
eine mit wenigstens dem ersten Sensor (10) gekoppelte erste Auswertungseinheit (16), die zum Auswerten des ersten Sensorsignals und zum Erzeugen des Betätigungssignals auf der Grundlage des ersten Sensorsignals ausgebildet ist; und/oder
eine mit wenigstens dem zweiten Sensor (12) gekoppelte zweite Auswertungseinheit (18), die zum Auswerten des zweiten Sensorsignals und zum Erzeugen des Betätigungssignals auf der Grundlage des zweiten Sensorsignals ausgebildet ist.

4. Vorrichtung nach Anspruch 3, wobei die erste Auswertungseinheit (16) von der zweiten Auswertungseinheit (18) verschieden und parallel zu dieser angeordnet ist.

5. Vorrichtung nach Anspruch 3 oder 4, wobei die Verarbeitungseinrichtung (12) ferner eine mit wenigstens der ersten Auswertungseinheit (16) gekoppelte Überprüfungseinheit (24) umfasst, die zur Überprüfung der Funktionsfähigkeit wenigstens der ersten Auswertungseinheit (16) ausgebildet ist, wobei bei irregulärer Funktionsfähigkeit der ersten Auswertungseinheit (16) das auf Grundlage des zweiten Sensorsignals erzeugte Betätigungssignal auszugeben ist.

6. Vorrichtung nach den Ansprüchen 4 und 5, wobei die Verarbeitungseinrichtung (14) ferner einen mit Ausgangsseiten der ersten Auswertungseinheit (16) und der zweiten Auswertungseinheit (18) gekoppelten Multiplexer (26) umfasst, der von der Überprüfungseinheit (24) in Abhängigkeit der Funktionsfähigkeit wenigstens der ersten Auswertungseinheit (16) ansteuerbar ist, um wahlweise das auf der Grundlage des ersten oder das auf Grundlage des zweiten Sensorsignals erzeugte Betätigungssignal auszugeben.

7. Vorrichtung nach einem der Ansprüche 3 bis 6, wobei die zweite Auswertungseinheit (18) einen Komparator (20) umfasst, der dazu ausgebildet ist, das zweite Sensorsignal mit einem Referenzsignal zu vergleichen und in Abhängigkeit des Vergleichs das Betätigungssignal zu erzeugen.

8. Vorrichtung nach einem der vorhergehenden Ansprüche, wobei der wenigstens eine erste Sensor (10) zur Erfassung einer Bremspedalbetätigung ausgebildet ist.

9. Vorrichtung nach Anspruch 8, wobei der wenigstens eine erste Sensor (10) ausgewählt ist aus der folgenden Gruppe von Sensoren: Pedalwegsensor, Pedalwinkelsensor, Pedalkraftsensor und Bremslichtgeber.

10. Vorrichtung nach einem der vorhergehenden Ansprüche, wobei der wenigstens eine zweite Sensor (12) ein Hydraulikdrucksensor ist, wobei der Hydraulikdrucksensor (12) vorzugsweise einem Radschlupfregelsystem zugeordnet ist.

11. Verfahren zum redundanten Erfassen einer Betätigung einer Kraftfahrzeug-Bremsanlage, umfassend:
Bereitstellen wenigstens eines ersten Sensors (10) zum Erzeugen eines ersten Sensorsignals, wobei das erste Sensorsignal auf eine Bewegung einer mechanischen Eingangskomponente der Bremsanlage hinweist;
Bereitstellen wenigstens eines zweiten Sensors (12) zum Erzeugen eines zweiten Sensorsignals, wobei das zweite Sensorsignal auf einen Hydraulikdruck in der Bremsanlage hinweist;
wahlweises Ausgeben eines auf Grundlage des ersten Sensorsignals oder eines auf Grundlage des zweiten Sensorsignals erzeugten Betätigungssignals, das auf eine Betätigung der Bremsanlage hinweist;
**gekennzeichnet durch**
Ausgeben des auf Grundlage des ersten Sensorsignals erzeugten Betätigungssignals bei regulärer Funktionsfähigkeit eines die Bremsanlage umfassenden Bremssystems und/oder Ausgeben des auf Grundlage des zweiten Sensorsignals erzeugten Betätigungssignals bei irregulärer Funktionsfähigkeit des Bremssystems.

12. Verfahren nach Anspruch 11, wobei das zweite Sensorsignal oder ein daraus abgeleitetes Signal zur Plausibilisierung des ersten Sensorsignals herangezogen wird, und wobei vorzugsweise bei negativer Plausibilisierung des ersten Sensorsignals auf eine irreguläre Funktionsfähigkeit der Vorrichtung geschlossen wird.

13. Verfahren nach Anspruch 11 oder 12, wobei
eine mit wenigstens dem ersten Sensor (10) gekoppelte erste Auswertungseinheit (16) das erste Sensorsignal auswertet und auf der Grundlage des ersten Sensorsignals das Betätigungssignal erzeugt; und/oder
eine mit wenigstens dem zweiten Sensor (12) gekoppelte zweite Auswertungseinheit (18) das zweite Sensorsignal auswertet und auf der Grundlage des zweiten Sensorsignals das Betätigungssignal erzeugt.

14. Verfahren nach Anspruch 13, wobei bei irregulärer Funktionsfähigkeit der ersten Auswertungseinheit (16) das auf Grundlage des zweiten Sensorsignals erzeugte Betätigungssignal ausgegeben wird.

15. Computerprogrammprodukt mit Programmcodemitteln zum Durchführen der Schritte eines der Ansprüche 11 bis 14, wenn das Computerprogrammprodukt auf einer Computereinrichtung ausgeführt wird.

## Claims

1. An apparatus for redundant registering of an actuation of a motor-vehicle braking system, comprising:
at least one first sensor (10) for generating a first sensor signal, the first sensor signal indicating a movement of a mechanical input component of the braking system;
at least one second sensor (12) for generating a second sensor signal, the second sensor signal indicating a hydraulic pressure in the braking system;
a processing device (14) coupled with the at least one first sensor (10) and with the at least one second sensor (12), which is configured:
to selectively output an actuation signal generated on the basis of the first sensor signal or an actuation signal generated on the basis of the second sensor signal, the actuation signal indicating an actuation of the braking system;
**characterized in that** the processing device is configured
to output the actuation signal generated on the basis of the first sensor signal in the case of normal operational capability of the apparatus, and/or to output the actuation signal generated on the basis of the second sensor signal in the case of irregular operational capability of the apparatus.

2. The apparatus according to Claim 1, wherein the processing device (14) is configured to use the second sensor signal or a signal derived therefrom for the purpose of checking the plausibility of the first sensor signal and wherein, preferably, the processing device (14) is configured to infer an irregular operational capability of the apparatus in the case of a negative plausibility check of the first sensor signal.

3. The apparatus according to one of the preceding claims, wherein the processing device (14) includes the following:
a first evaluating unit (16) coupled with at least the first sensor (10), which is configured for evaluating the first sensor signal and for generating the actuation signal on the basis of the first sensor signal; and/or
a second evaluating unit (18) coupled with at least the second sensor (12), which is configured for evaluating the second sensor signal and for generating the actuation signal on the basis of the second sensor signal.

4. The apparatus according to Claim 3, wherein the first evaluating unit (16) is different from the second evaluating unit (18) and is arranged parallel to the latter.

5. The apparatus according to Claim 3 or 4, wherein the processing device (12) further includes a checking unit (24) coupled with at least the first evaluating unit (16), which is configured for checking the operational capability of at least the first evaluating unit (16), whereby in the case of irregular operational capability of the first evaluating unit (16) the actuation signal generated on the basis of the second sensor signal is to be output.

6. The apparatus according to Claims 4 and 5, wherein the processing device (14) further includes a multiplexer (26) coupled with output sides of the first evaluating unit (16) and of the second evaluating unit (18), which is capable of being driven by the checking unit (24) as a function of the operational capability of at least the first evaluating unit (16), in order to selectively output the actuation signal generated on the basis of the first sensor signal or the actuation signal generated on the basis of the second sensor signal.

7. The apparatus according to one of Claims 3 to 6, wherein the second evaluating unit (18) includes a comparator (20) which is designed to compare the second sensor signal with a reference signal and to generate the actuation signal dependent on the comparison.

8. The apparatus according to one of the preceding claims, wherein the at least one first sensor (10) is designed for registering an actuation of the brake pedal.

9. The apparatus according to Claim 8, wherein the at least one first sensor (10) has been selected from the following group of sensors: pedal-travel sensor, pedal-angle sensor, pedal-force sensor and brake-light switch.

10. The apparatus according to one of the preceding claims, wherein the at least one second sensor (12) is a hydraulic-pressure sensor, wherein, preferably, the hydraulic-pressure sensor (12) has been assigned to a wheel-slip control system.

11. A method for redundant registering of an actuation of a motor-vehicle braking system, comprising:
providing at least one first sensor (10) for generating a first sensor signal, the first sensor signal indicating a movement of a mechanical input component of the braking system;
providing at least one second sensor (12) for generating a second sensor signal, the second sensor signal indicating a hydraulic pressure in the braking system;
selectively outputting an actuation signal generated on the basis of the first sensor signal, or an actuation signal generated on the basis of the second sensor signal, which indicates an actuation of the braking system;
**characterized by**:
in the case of normal operational capability of an extended braking system including the braking system, outputting the actuation signal generated on the basis of the first sensor signal, and/or in the case of irregular operational capability of the extended braking system, outputting the actuation signal generated on the basis of the second sensor signal.

12. The method according to Claim 11, wherein the second sensor signal or a signal derived therefrom is used for the purpose of checking the plausibility of the first sensor signal and wherein, preferably, in the case of a negative plausibility check of the first sensor signal an irregular operational capability of the apparatus is inferred.

13. The method according to Claim 11 or 12, wherein
a first evaluating unit (16) coupled with at least the first sensor (10) evaluates the first sensor signal and generates the actuation signal on the basis of the first sensor signal; and/or
a second evaluating unit (18) coupled with at least the second sensor (12) evaluates the second sensor signal and generates the actuation signal on the basis of the second sensor signal.

14. The method according to Claim 13, wherein in the case of irregular operational capability of the first evaluating unit (16) the actuation signal generated on the basis of the second sensor signal is output.

15. A computer-program product with program-code means for implementing the steps of one of Claims 11 to 14 when the computer-program product is run on a computer device.

## Revendications

1. Dispositif destiné à la détection redondante de l'actionnement d'une installation de freinage d'un véhicule automobile, comprenant :
au moins un premier capteur (10) destiné à générer un premier signal de détection, ce premier signal de détection indiquant un mouvement de la part d'un composant d'entrée mécanique de l'installation de freinage ;
au moins un deuxième capteur (12) destiné à générer un deuxième signal de détection, ce deuxième signal de détection indiquant la présence d'une pression hydraulique dans l'installation de freinage ;
un dispositif de traitement (14) relié audit au moins un premier capteur (10) et audit au moins un deuxième capteur (12), lequel dispositif est conçu :
pour émettre sélectivement un signal d'actionnement généré sur la base du premier signal de détection ou sur la base du deuxième signal de détection, ce signal d'actionnement indiquant un actionnement de l'installation de freinage ;
**caractérisé en ce que** le dispositif de traitement est conçu pour émettre le signal d'actionnement généré sur la base du premier signal de détection lors du fonctionnement normal du dispositif et/ou pour émettre le signal d'actionnement généré sur la base du deuxième signal de détection lors du fonctionnement irrégulier du dispositif.

2. Dispositif selon la revendication 1, ledit dispositif de traitement (14) étant conçu pour utiliser le deuxième signal de détection ou un signal dérivé de celui-ci pour plausibiliser le premier signal de détection, et ce dispositif de traitement (14) étant préférentiellement conçu pour conclure à un fonctionnement irrégulier du dispositif dans le cas d'une plausibilisation négative.

3. Dispositif selon l'une des revendications précédentes, ledit dispositif de traitement (14) comprenant ce qui suit :
une première unité d'analyse (16) reliée au moins audit premier capteur (10), laquelle unité est conçue pour analyser le premier signal de détection et pour générer le signal d'actionnement sur la base du premier signal de détection ; et/ou
une deuxième unité d'analyse (18) reliée au moins audit deuxième capteur (12), laquelle unité est conçue pour analyser le deuxième signal de détection et pour générer le signal d'actionnement sur la base du deuxième signal de détection.

4. Dispositif selon la revendication 3, cette première unité d'analyse (16) étant différente de la deuxième unité d'analyse (18) et disposée parallèlement par rapport à cette dernière.

5. Dispositif selon la revendication 3 ou 4, ledit dispositif de traitement (12) comprenant en outre une unité de contrôle (24) reliée au moins à ladite première unité d'analyse (16), laquelle unité est conçue pour contrôler le fonctionnement d'au moins ladite première unité d'analyse (16), le signal d'actionnement généré sur la base du deuxième signal de détection devant être émis lors du fonctionnement irrégulier de la première unité d'analyse (16).

6. Dispositif selon les revendications 4 et 5, ledit dispositif de traitement (14) comprenant en outre un multiplexeur (26) relié aux côtés sortie de la première unité d'analyse (16) et de la deuxième unité d'analyse (18), lequel peut être commandé à partir de l'unité de contrôle (24) en fonction du fonctionnement d'au moins ladite première unité d'analyse (16) pour émettre au choix le signal d'actionnement généré sur la base du premier ou sur la base du deuxième signal de détection.

7. Dispositif selon l'une des revendications 3 à 6, la deuxième unité d'analyse (18) comprenant un comparateur (20) qui est conçu pour comparer le deuxième signal de détection à un signal de référence et pour générer le signal d'actionnement en fonction du résultat de la comparaison.

8. Dispositif selon l'une des revendications précédentes, ledit au moins un premier capteur (10) étant conçu pour détecter un actionnement de la pédale de frein.

9. Dispositif selon la revendication 8, ledit au moins un premier capteur (10) étant sélectionné parmi le groupe de capteurs suivants : capteur de course de pédale, capteur d'angle de pédale, capteur de force de pédale et indicateur de lumière de freinage.

10. Dispositif selon l'une des revendications précédentes, ledit au moins un deuxième capteur (12) étant un capteur de pression hydraulique, ce capteur de pression hydraulique (12) étant préférentiellement associé à une installation de freinage à antiblocage des roues.

11. Procédé de détection redondante de l'actionnement d'une installation de freinage d'un véhicule automobile, comprenant :
la mise à disposition d'au moins un premier capteur (10) destiné à générer un premier signal de détection, ce premier signal de détection indiquant un mouvement de la part d'un composant d'entrée mécanique de l'installation de freinage ;
la mise à disposition d'au moins un deuxième capteur (12) destiné à générer un deuxième signal de détection, ce deuxième signal de détection indiquant la présence d'une pression hydraulique dans l'installation de freinage ;
l'émission sélective d'un signal d'actionnement généré sur la base du premier signal de détection ou sur la base du deuxième signal de détection, ce signal d'actionnement indiquant un actionnement de l'installation de freinage ;
**caractérisé par** l'émission du signal d'actionnement généré sur la base du premier signal de détection lors du fonctionnement normal d'un système de freinage comprenant l'installation de freinage et/ou l'émission du signal d'actionnement généré sur la base du deuxième signal de détection lors du fonctionnement irrégulier du système de freinage.

12. Procédé selon la revendication 11, le deuxième signal de détection ou un signal dérivé de celui-ci étant utilisé pour la plausibilisation du premier signal de détection, et un fonctionnement irrégulier du dispositif étant déduit préférentiellement dans le cas d'une plausibilisation négative du premier signal de détection.

13. Procédé selon la revendication 11 ou 12,
une première unité d'analyse (16) reliée au moins audit premier capteur (10) analysant le premier signal de détection et générant le signal d'actionnement sur la base du premier signal de détection ; et/ou
une deuxième unité d'analyse (18) reliée au moins audit deuxième capteur (12) analysant le deuxième signal de détection et générant le signal d'actionnement sur la base du deuxième signal de détection.

14. Procédé selon la revendication 13, le signal d'actionnement généré sur la base du deuxième signal de détection étant émis lors du fonctionnement irrégulier de la première unité d'analyse (16).

15. Produit de programme informatique comprenant des moyens de codage de programme pour exécuter les étapes d'une des revendications 11 à 14 lorsque le produit de programme informatique est exécuté sur un système ordinateur.
